# EUROPEAN PATENT SPECIFICATION

(11) **EP 3 705 700 B1**
(45) Date of publication and mention of the grant of the patent: **08.12.2021**
(21) Application number: 19386060.8
(22) Date of filing: 31.12.2019
(51) Int. Cl.: F03B 17/04, F02B 75/36, F03B 17/02

(54) **THERMAL ENGINE PRODUCING MECHANICAL WORK USING BUOYANCY IN A LIQUID MEDIUM**
WÄRMEKRAFTMASCHINE ZUR ERZEUGUNG MECHANISCHER ARBEIT UNTER VERWENDUNG VON AUFTRIEB IN EINEM FLÜSSIGEN MEDIUM
MOTEUR THERMIQUE PRODUISANT UN TRAVAIL MÉCANIQUE EN UTILISANT LA FLOTTABILITÉ DANS UN MILIEU LIQUIDE

(30) Priority: 31.12.2018 GR 20180100576
(43) Date of publication of application: 09.09.2020
(73) Proprietor: Skiadas, Napoleon, 15562 Cholargos (GR)
(72) Inventor: SKIADAS, Napoleon, 15562 Cholargos (GR); SKIADAS, Lykourgos, 22131 Tripoli (GR)

(56) References cited:
- WO-A1-2008/099045
- KR-A- 20100 006 156

## Description

During the production of mechanical work in thermal engines a large proportion of energy is diffused unused to the environment during the discharge of the combustion products, as this process takes place over a short period of time.

With the present thermal engine, the combustion products are discharged to the outside environment at a later stage, due to their staying in a moving combustion chamber.

The present thermal engine have features in common with other buoyancy engines, such as the engine described in the patent WO 2008/099045A1, that are characterised by compartments capable of modulated volume anchored on a belt or chain producing mechanical work using buoyancy.

The main disadvantage of these engines is that their compartments cannot be considered as one close thermodynamic systems, taking into account the need for another system, a feeder apparatus with pressurized air or for a combustion chamber located at the lowest point beneath the liquid medium. The aforementioned feature leads in an augmentation in entropy dispersal and furthermore in manufacturing constrains due to operation under liquid.

With the present engine the need for an external system, feeder apparatus is usefulness as the combustion takes place in a moving combustion chamber, after the placement of a fuel cell on it when the chamber is located above the liquid surface.

The above mentioned features of the present engine eliminate the diffusion of energy to the environment, confront the manufacturing constrains as far as concerns the fuel supply and the ignition beneath the liquid surface, and make its operation in greater depths, in a lake or in a sea, more convenient with less mechanical parts. Initially the energy of the combustion is converted in potential energy in a moving combustion chamber and subsequently to mechanical work throughout buoyancy.

The present thermal engine converts heat energy into mechanical work by means of the periodic movement of combustion chambers anchored on a belt or chain within a liquid medium, in an open or closed tank (1), using the force of buoyancy. The combustion chamber consists of elastic material, capable of modulating its volume. After the ignition of the fuel in the combustion chamber, the gases generated remain within it, inflating it and forcing it to move with the force of buoyancy towards the surface of the liquid, generating work that is converted to rotary motion by means of gear belts, thus driving an electric motor (9).

The thermal cycle on which the thermal engine is based, which has at least two moving combustion chambers, consists of the following stages:
I. insertion of fuel, in the fuel cell insertion base (3), inside the elastic combustion chamber (2);
II. descent of the combustion chamber through the production of work by a second moving combustion chamber (2) that is also anchored on the same belt (10) as the first, but in an opposite position, so that when one combustion chamber ascends the other descends;
III. ignition of the fuel and expansion of the combustion chamber (2) after the descent;
IV. production of work through the buoyancy exerted on the combustion chamber, up to its ascend to the surface of the liquid, while generating torque through the belt on which the combustion chamber is anchored;
V. discharge of combustion chamber gases through an exhaust valve (4);
VI. extraction of the fuel cell from the insertion base (3) and placement in the storage compartment (6).

Two robotic arms (7.8) are used to insert and extract the fuel cell to and from the combustion chamber.

The arm (8) extracts the fuel cell from the fuel insertion base (3) and places it in the storage compartment (6), while the arm (7) takes the fuel cell from the fuel compartment (5) and places it in the cell's insertion base (3).

The fuel cell can be reused. It can also be ignited wirelessly and mechanically via sensors. The present thermal engine can operate on solid fuels as well as on liquid and gaseous, in compressed form, fuels that occupy a smaller area.

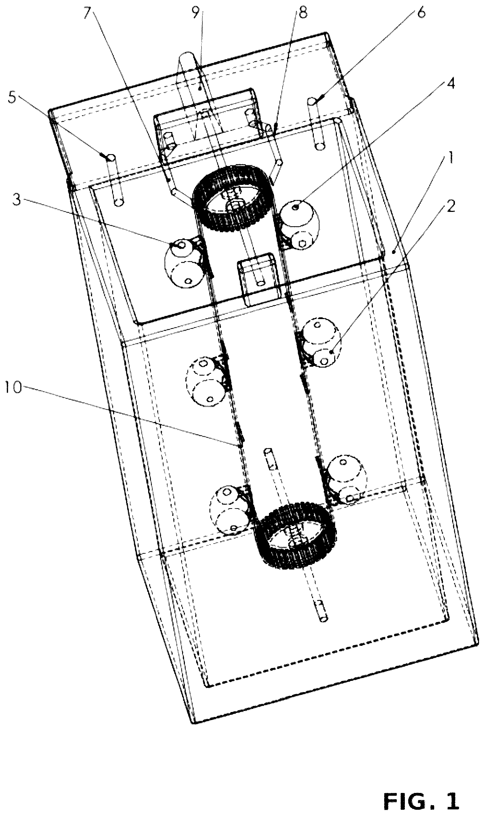

## Claims

1. Thermal engine producing mechanical work using buoyancy, with chambers capable of modulating volume anchored on a belt or chain having a slow discharge of the combustion products wherein the combustion occurs inside periodically moving combustion chambers with elastic walls (2) immersed in a liquid medium,
**characterized in that** the fuel and the ignition material are contained in a fuel cell, said fuel cell being inserted into, and extracted from the combustion chamber when the moving combustion chamber is located above the surface of the liquid medium, and **in that** one robitic arm is, or two robotic arms (7,8) are used for the insertion and extraction of the fuel cell into and out of the combustion chamber.

## Patentansprüche

1. Wärmekraftmaschine, die mechanische Arbeit durch Auftrieb erzeugt, mit Kammern, die das Volumen modulieren können, verankert oder kettenförmig mit einer langsamen Abgabe der Verbrennungsprodukte, wobei die Verbrennung in sich periodisch bewegenden Verbrennungskammern mit elastischen Wänden (2) stattfindet, die in ein flüssiges Medium eingetaucht sind, **dadurch gekennzeichnet, dass** der Brennstoff und das Zündmaterial in einer Brennstoffzelle enthalten sind, wobei die Brennstoffzelle in die Brennkammer eingesetzt und aus dieser entnommen wird, wenn sich die bewegliche Brennkammer über der Oberfläche des flüssigen Mediums befindet, und dass ein Roboterarm oder zwei Roboterarme (7,8) zum Ein- und Ausfahren von Vollzellen in und aus der Brennkammer.

## Revendications

1. Moteur thermique produisant un travail mécanique utilisant la flottabilité, avec des chambres capables de moduler le volume ancrées sur une courroie ou une chaîne ayant une évacuation lente des produits de combustion dans laquelle la combustion se produit à l'intérieur de chambres de combustion en mouvement périodique avec parois élastiques (2) immergées dans un milieu liquide, **caractérisées en ce que** le combustible et le matériau d'allumage sont contenus dans une pile à combustible, ladite pile à combustible étant insérée dans et extraite de la chambre de combustion lorsque la chambre de combustion en mouvement est située au-dessus de la surface du milieu liquide, et **en ce qu'**un bras robotique est, ou deux bras robotiques (7, 8) sont utilisés pour l'insertion et l'extraction de la pile à combustible dans et hors de la chambre de combustion.
